# EUROPÄISCHE PATENTSCHRIFT

(11) **EP 0 985 564 B1**
(45) Veröffentlichungstag und Bekanntmachung des Hinweises auf die Patenterteilung: **29.10.2003**
(21) Anmeldenummer: 99125845.0
(22) Anmeldetag: 02.08.1996
(51) Int. Cl.: B60D 1/06

(54) **Anhängevorrichtung**
Vehicle towing device
Dispositif d'attelage

(30) Priorität: 02.08.1995 DE 29512453 U
(43) Veröffentlichungstag der Anmeldung: 15.03.2000
(62) Teilanmeldung aus: 96927670.8
(73) Patentinhaber: ORIS FAHRZEUGTEILE HANS RIEHLE GmbH, 71696 Möglingen (DE)
(72) Erfinder: Blank, Hans, 71696 Möglingen (DE); Bertsch, Otto Karl, 71642 Ludwigsburg (DE); Riehle, Hans, 71638 Ludwigsburg (DE); Purz, Matthias, 71691 Freiberg (DE)
(74) Vertreter: Hoeger, Stellrecht & Partner

(56) Entgegenhaltungen:
- EP-A- 0 270 745
- DE-A- 4 017 083
- DE-A- 4 104 671
- DE-B- 1 255 509
- DE-U- 8 423 990
- US-A- 4 118 049

## Beschreibung

Die Erfindung betrifft eine Anhängevorrichtung, insbesondere für Personenkraftwagen, umfassend einen Kugelhals, eine an einem ersten anhängerseitigen Ende des Kugelhalses angeordnete Kupplungskugel und ein an einem zweiten Ende des Kugelhalses angeordnetes und diesen am Fahrzeug haltendes Befestigungsmittel.

Derartige Anhängevorrichtungen sind aus der DE-U-84 23 990.5 bekannt.

Diese Anhängevorrichtungen werden bislang aus Gründen der Sicherheit ausschließlich aus Stahl hergestellt und haben den Nachteil, daß sie das Heck des Personenwagens mit erheblichem Gewicht belasten.

Der Erfindung liegt daher die Aufgabe zugrunde, eine Anhängevorrichtung mit geringerem Gewicht zu schaffen.

Diese Aufgabe wird bei einer Anhängevorrichtung der eingangs beschriebenen Art erfindungsgemäß dadurch gelöst, daß zumindest der Kugelhals aus Leichtmetall hergestellt ist und daß die Kupplungskugel aus einem verschleißfesterem Material als Leichtmetall hergestellt ist.

Der Vorteil der erfindungsgemäßen Lösung ist insbesondere darin zu sehen, daß damit das Gewicht der Anhängevorrichtung erheblich reduziert wird und daß außerdem auch insbesondere bei einer aus einer Arbeitsstellung entfernbaren, wie beispielsweise einer abnehmbaren oder verschwenkbaren Kupplung die Handhabung derselben erheblich erleichtert wird.

Erfindungsgemäß ist dabei die Kupplungskugel aus einem verschleißfesterem Material als Leichtmetall hergestellt, um die anhängerseitigen Belastungen aufnehmen zu können.

Als Leichtmetall kommen die verschiedenen bekannten Leichtmetalle und Leichtmetallegierungen in Frage.

Als besonders vorteilhaft hat es sich erwiesen, Aluminium oder eine seiner Legierungen zu verwenden.

Alternativ dazu ist es aber auch vorteilhaft, Magnesium oder eine seiner Legierungen zu verwenden.

Aluminium oder dessen Legierungen oder Magnesium oder dessen Legierungen haben den Vorteil, daß trotz eines geringen Gewichts eine hohe Korrosionsbeständigkeit und eine entsprechend hohe mechanische Festigkeit gegeben ist.

Das Material der Kupplungskugel kann prinzipiell beliebig, beispielsweise aus Stahl, sein. Alternativ ist es denkbar, ein Keramikteil zu verwenden.

Ein Ausführungsbeispiel sieht vor, daß die Kupplungskugel durch einen Aufsatz aus dem verschleißfesteren Material als Leichtmetall umfaßt.

Durch einen derartigen Aufsatz besteht ebenfalls die Möglichkeit, der Kupplungskugel eine ausreichend verschleißfeste Oberfläche zu geben, ohne bei der Ausbildung der Kupplungskugel, insbesondere des Kugelhalses derselben, auf Leichtmetall verzichten zu müssen.

Der Aufsatz ist vorzugsweise als kappenähnliches separates Teil ausgebildet, welches die von dem anhängerseitigen Kupplungsteil beaufschlagten Kugelflächen aufweist.

Der Aufsatz kann dabei in unterschiedlichster Art und Weise mit dem Kugelhals verbunden sein. Eine Möglichkeit ist, den Aufsatz mit dem Kugelhals durch Reibschweißen zu verbinden, wobei vorzugsweise sowohl der Aufsatz als auch das den Kugelhals umfassende Leichtmetallteil aneinander anfügbare Stirnflächen aufweisen, welche im geschweißten Zustand eine Reibschweißfläche ergeben. Die Reibschweißfläche kann im Bereich eines Übergangs von der Kupplungskugel zum Kugelhals liegen.

Eine günstigere Lösung sieht vor, daß die Reibschweißfläche die Kupplungskugel schneidet, das heißt, daß ein Teil der Kupplungskugel auch aus Leichtmetall ist und der Aufsatz den übrigen Teil der Kupplungskugel bildet. Der Vorteil dieser Lösung ist darin zu sehen, daß damit die Reibschweißfläche größer ist und geringeren Belastungen ausgesetzt ist.

Ein anderes zweckmäßiges Ausführungsbeispiel sieht vor, daß der Aufsatz einen Fortsatz des Kugelhalses kappenähnlich übergreift. Damit ist die Möglichkeit geschaffen, mit dem Fortsatz ebenfalls im Bereich der Kupplungskugel Leichtmetall zu verwenden, jedoch sicherzustellen, daß die Oberfläche der-selben den vorgesehenen mechanischen Beanspruchungen Stand hält.

Der Fortsatz ist dabei vorzugsweise an das anhängerseitige Ende desselben einstückig angeformt.

Hinsichtlich der Fixierung des Aufsatzes an dem Fortsatz sind die unterschiedlichsten Möglichkeiten denkbar. So sieht eine vorteilhafte Möglichkeit vor, daß der Aufsatz formschlüssig an dem Fortsatz gehalten ist, wobei jede Art von Formschluß, auch beispielsweise ein Gewinde oder eine Verstiftung, hierbei denkbar sind.

Alternativ dazu ist vorgesehen, daß der Aufsatz kraftschlüssig an dem Fortsatz gehalten ist, wobei hierunter auch ein Aufschrumpfen mittels Passungen vorgesehen ist.

Eine weitere Möglichkeit sieht vor, daß der Aufsatz und der Fortsatz miteinander verklebt sind.

Eine weitere Variante der erfindungsgemäßen Lösung sieht vor, daß die Kupplungskugel aus dem verschleißfesteren Material als Leichtmetall hergestellt ist und einen Ansatz aufweist, welcher mit dem Kugelhals verbunden ist. Diese Lösung hat den Vorteil, daß sich in einfacher Art und Weise die gesamte Kupplungskugel mechanisch aus diesem Material herstellen läßt und dann durch einen Ansatz mit dem Kugelhals verbindbar ist.

Der Ansatz ist dabei zweckmäßigerweise so ausgebildet, daß er in das die Kupplungskugel tragende Ende des Kugelhalses hineingreift.

Der Ansatz läßt sich dabei in unterschiedlichster Art und Weise mit dem Kugelhals verbinden.

So sieht eine Möglichkeit vor, daß der Ansatz formschlüssig mit dem Kugelhals verbunden ist. Diese formschlüssige Verbindung umfaßt jede Art von Formschluß, unter anderem aber auch ein Gewinde oder ein Verstiften.

Besonders günstig läßt sich die formschlüssige Verbindung dann herstellen, wenn der Ansatz der Kupplungskugel in den Kugelhals eingeschmiedet ist, wobei hierzu entweder am Ansatz oder am Kugelhals Hinterschneidungen vorgesehen sind, in welche das Leichtmetall des Kugelhalses beim Schmieden eingreift, um die formschlüssige Verbindung herzustellen.

Eine weitere Alternative sieht vor, daß der Ansatz und der Kugelhals miteinander verklebt sind.

Außerdem ist es ebenfalls denkbar, daß der Ansatz und der Kugelhals kraftschlüssig miteinander verbunden sind, wobei hierunter ein Aufschrumpfen oder ein Aufsetzen mit entsprechender Passung oder ein Einschmieden ohne Hinterschneidungen fällt.

Hinsichtlich der Ausbildung des Kugelhalses selbst wurden im Zusammenhang mit der bisherigen Lösung noch keine weiteren Ausführungen gemacht. So ist es prinzipiell möglich, den Kugelhals mit im wesentlichen rundem oder ovalem Querschnitt auszuführen.

Eine besonders hohe Stabilität des Kugelhalses ist dann erreichbar, wenn dieser zumindest abschnittsweise, insbesondere im Anschluß an das zweite Ende beiderseits mit Längsrippen versehen ist, da durch diese Rippen eine erhebliche Versteifung mit möglichst geringem Materialeinsatz erhältlich ist.

Ein besonders zweckmäßiges Ausführungsbeispiel sieht vor, daß der Kugelhals zumindest abschnittsweise, insbesondere im Anschluß an das zweite Ende im Querschnitt doppel-T-förmig ausgebildet ist.

Vorzugsweise läuft in diesen Fällen der mit Längsrippen versehene oder im Querschnitt doppel-T-förmig ausgebildete Kugelhals in einen im wesentlichen runden Querschnitt im Bereich des ersten Endes, welches die Kupplungskugel trägt, aus.

Obwohl der Kugelhals keinen hohen Oberflächenbeanspruchungen ausgesetzt ist, ist es bei einer Ausführungsform zweckmäßig, wenn der Kugelhals mit einer Oberflächenschicht versehen ist, welche aus härterem Material als das Leichtmetall eines Körpers des Kugelhalses ausgebildet ist, da in diesem Fall die Oberflächenschicht dazu dient, dem Kugelhals insgesamt eine hohe Formsteifigkeit und verbesserte Langzeitstabilität zu verleihen, welche wiederum die Möglichkeit schafft, den Querschnitt des Kugelhalses möglichst gering zu halten.

Im Zusammenhang mit der bisherigen Erläuterung der einzelnen Ausführungsbeispiele wurde nicht näher darauf eingegangen, wie die Anhängevorrichtung selbst ausgestaltet sein soll. So ist es beispielsweise denkbar, auch eine starre Anhängevorrichtung entsprechend den vorstehend beschriebenen Merkmalen auszubilden.

Besonders zweckmäßig ist es jedoch, wenn die Anhängevorrichtung einen aus einer Arbeitsstellung entfernbaren, beispielsweise einen abnehmbaren Kugelhals oder einen um eine Achse verschwenkbaren Kugelhals aufweist, da in diesem Fall nicht nur die Gewichtsreduzierung der gesamten Anhängevorrichtung eine Rolle spielt, sondern sich die Verwendung von Leichtmetall auch positiv auf die Handhabung des Kugelhalses auswirkt.

So sieht ein Ausführungsbeispiel mit abnehmbarem Kugelhals vor, daß das Befestigungsmittel einen an dem zweiten Ende des Kugelhalses angeordneten Schaft umfaßt, welche in eine fahrzeugfeste Aufnahmehülse einsetzbar ist.

In diesem Fall ist vorzugsweise vorgesehen, daß auch der Schaft aus Leichtmetall hergestellt ist.

Besonders zweckmäßig läßt sich der Schaft dann herstellen, wenn dieser einstückig an den Kugelhals angeformt ist, um eine stabile Einheit zu erhalten.

Um auch dem teilweise punktförmigen Kräften ausgesetzten Schaft eine möglichst hohe Standzeit zu verleihen, ist vorzugsweise vorgesehen, daß dieser mit einer Oberflächenschicht versehen ist, welche aus härterem Material als das Leichtmetall eines Schaftkörpers ist.

Eine weitere vorteilhafte Variante der erfindungsgemäßen Lösung sieht vor, daß im Schaft vorgesehene Anlageflächen für Verriegelungselemente eine Oberflächenschicht aufweisen, welche aus härterem Material als das des Leichtmetalls des Körpers des Schaftes ist.

Insbesondere im Bereich des Schaftes hat es sich als vorteilhaft erwiesen, wenn die Anlageflächen für Verriegelungselemente durch in den Schaft eingesetzte Einsatzteile aus einem eine höhere Oberflächenfestigkeit als Leichtmetall aufweisenden Material gebildet sind.

Vorzugsweise sind diese Einsatzteile ringförmige, in eine entsprechende Ausnehmung im Schaft vorgesehene Einsatzteile.

Auch hinsichtlich der Aufnahmehülse der Befestigungsmittel wurden bislang keine näheren Angaben gemacht. So sieht ein Ausführungsbeispiel vor, daß die Aufnahmehülse aus Leichtmetall ist.

Auch bei der Ausbildung der Aufnahmehülse aus Leichtmetall gilt es, gegebenenfalls punktförmige Flächenbelastungen, beispielsweise durch Verriegelungselemente zu vermeiden. Aus diesem Grund ist vorteilhafterweise vorgesehen, daß die Aufnahmehülse Anlageflächen für Verriegelungselemente aufweist, welche aus einem härteren Material als das Leichtmetall eines Körpers der Aufnahmehülse ist.

Alternativ zu einer Anhängevorrichtung mit abnehmbaren Kugelhals sieht eine andere Variante der erfindungsgemäßen Anhängevorrichtung vor, daß der Kugelhals durch das Befestigungsmittel relativ zum Fahrzeug aus einer Arbeitsstellung heraus in eine Ruhestellung und umgekehrt bewegbar, beispielsweise um eine Achse schwenkbar, am Kraftfahrzeug gehalten ist.

In diesem Fall ist vorzugsweise vorgesehen, daß der am Kugelhals gelagerte Lagerkörper des Befestigungsmittels aus Leichtmetall hergestellt ist.

Auch hierbei ist es besonders zweckmäßig, wenn der Lagerkörper einstückig an den Kugelhals angeformt ist.

Hinsichtlich des Ausbildung des Kugelhalses im Zuge der Herstellung desselben wurden im Zusammenhang mit der bisherigen Erläuterung der einzelnen Ausführungsbeispiele noch keine näheren Angaben gemacht.

Bei allen vorstehenden Ausführungsbeispielen ist es besonders zweckmäßig, wenn der Kugelhals und insbesondere die an diesem angeformten Teile als im Gesenk geschmiedetes Teil hergestellt sind, da diese Herstellungsform einerseits eine besonders zweckmäßige Art und Weise der Formgebung erlaubt und andererseits bei geeigneter Form des Gesenks Fließlinien im Material entstehen läßt, welche hinsichtlich der mechanischen Stabilität des Kugelhalses besonders vorteilhaft sind.

Dabei ist es insbesondere auch vorteilhaft, wenn die an dem Kugelhals angeformten Elemente aus Leichtmetall als zusammen mit dem Kugelhals hergestellte, im Gesenk geschmiedete Teile hergestellt sind.

Alternativ zur Herstellung des Kugelhalses als im Gesenk geschmiedetes Teil, sieht ein weiteres vorteilhaftes Ausführungsbeispiel vor, daß der Kugelhals und insbesondere auch an diesem gehaltene Elemente aus Leichtmetall durch ein Pressgießverfahren hergestellt sind.

Ein derartiges Pressgießverfahren hat den Vorteil, daß der Kugelhals im wesentlichen endkonturnah hergestellt wird, ohne daß eine erhebliche nachfolgende Bearbeitung erforderlich ist, wobei das Pressgießverfahren ebenfalls geeignet ist, dem Kugelhals und den gegebenenfalls an diesem gehaltenen Elementen aus Leichtmetall die geforderte Festigkeit zu verleihen.

Alternativ hierzu sieht ein weiteres zweckmäßiges Ausführungsbeispiel vor, daß der Kugelhals und insbesondere die daran angeordneten Elemente aus Leichtmetall durch eine Art Flüssigschmieden hergestellt sind. Ein derartiges Schmieden sieht vor, mit einem thixotropischen Material zu arbeiten, welches einerseits eine gewisse Formstabilität aufweist, andererseits durch Belastung mit Druck zähflüssig wird und sich in einfacher Weise in eine Form pressen läßt.

Der Vorteil eines derartigen Flüssigschmiedens ist darin zu sehen, daß damit dem Bauteil aus Leichtmetall eine Struktur der Fließlinien verliehen werden kann, die dessen mechanische Belastbarkeit verbessert.

Hinsichtlich der Art der Ausbildung der Oberflächenschicht aus einem härteren Metall als Leichtmetall wurden bislang keine näheren Angaben gemacht. So sind diesbezüglich die unterschiedlichsten Ausbildungen denkbar.

Ein vorteilhaftes Ausführungsbeispiel sieht dabei vor, daß die Oberflächenschicht aus härterem Metall als Leichtmetall als Schicht aus durch eindiffundieren von Stoffen verfestigtem Leichtmetall des jeweiligen Körpers hergestellt ist. Das heißt, daß in diesem Fall ein Oberflächenverfestigen des jeweiligen Leichtmetalls erfolgt, wobei alle, die mechanische Festigkeit oder Härte des Leichtmetalls verbessernden Verfestigungen durch Eindiffusion von Stoffen denkbar sind.

Eine besonders vorteilhafte Lösung sieht vor, daß die verfestigte Oberfläche durch Nitrieren hergestellt ist.

Als besonders zweckmäßiges Eindiffundieren von Stoffen in Leichtmetall hat sich ein Plasmadiffundieren, im Fall von Stickstoff ein Plasmanitrieren erwiesen.

Eine weitere Möglichkeit ist auch das Durchführen einer Randzonenhärtung, beispielsweise ein Implatationsverfahren.

Eine andere vorteilhafte Lösung sieht vor, daß die Oberflächenschicht aus härterem Material als Leichtmetall durch Oxidieren desselben, insbesondere durch anodisches Oxidieren erhältlich ist.

Eine weitere zum vorstehend beschriebenen Verfestigen des Leichtmetalls alternative Lösung sieht vor, daß die Oberflächenschicht aus härterem Material als Leichtmetall durch eine Keramikschicht gebildet ist, wobei auch hier alle Arten von Keramikschichten denkbar sind.

Besonders zweckmäßig läßt sich hierbei eine Keramikschicht herstellen, welche eine oxidkeramische Schicht ist, da diese einfach herstellbar ist und fest auf dem jeweiligen Körper aus Leichtmetall haftet.

Eine andere besonders zweckmäßige Lösung einer Keramikschicht betrifft eine Ausbildung derselben als Kunststoffkeramikschicht, welche ebenfalls leicht aufbringbar, gut mit dem Leichtmetall des Körpers verbindbar ist und außerdem neben Korrosionsbeständigkeit insbesondere eine höhere Oberflächenhärte erreichen läßt.

Eine weitere vorteilhafte Ausbildung der erfindungsgemäßen Oberflächenschicht sieht vor, daß diese durch Vernickelung erhältlich ist.

Insbesondere hat sich hierbei eine Vernickelung im Wege einer chemischen Vernickelung als vorteilhaft erwiesen.

Eine besonders zweckmäßige erfindungsgemäße Lösung sieht vor, daß die Anhängekupplung aus einem Leichtmetall, vorzugsweise aus Aluminium oder eine Aluminiumlegierung besteht. Hierbei wird das Vorurteil überwunden, daß nur Stahl den auftretenden Belastungen gerecht wird, wobei durch Versuche überraschenderweise festgestellt wurde, daß auch Leichtmetall bei entsprechender Gestaltung alle vorkommenden Belastungen aushält.

Eine besonders bevorzugte Lösung sieht vor, daß die Anhängekupplung, insbesondere für Personenkraftwagen, im wesentlichen aus einem Kugelhals mit Kupplungskugel und aus den Kugelhals am Fahrzeug haltenden Befestigungsmitteln besteht, wobei erfindungsgemäß die Anhängekupplung aus einem Leichtmetall, vorzugsweise aus Aluminium oder einer seiner Legierungen besteht.

Ein besonders zweckmäßiges Ausführungsbeispiel dieser Lösung sieht vor, daß die Anhängevorrichtung aus im Gesenk geschmiedetem Aluminium besteht.

Eine weitere vorteilhafte Variante sieht vor, daß an der Anhängevorrichtung aus Stahl bestehende Teile an- oder eingeschmiedet sind.

Besonders zweckmäßig ist es hierbei, wenn die Kupplungskugel aus einem Stahlaufsatz besteht.

Eine weitere zweckmäßige Lösung sieht vor, daß die Kupplungskugel aus Stahl besteht und mit einem Ansatz in den Kupplungshals eingeschmiedet ist.

Alternativ zum Vorsehen von Stahl ist eine Kupplungskugel vorgesehen, welche mit einer harten Beschichtung versehen ist.

Zur Verbesserung der Stabilität des Kugelhalses ist vorgesehen, daß dieser beiderseits mit Längsrippen versehen ist.

Ein weiteres vorteilhaftes Ausführungsbeispiel sieht vor, daß bei Verwendung von Aluminium oder dessen Legierungen die Oberfläche durch elektrolytische Oxidation behandelt ist.

Insbesondere wenn man mit einer starken Beanspruchung rechnet ist es zweckmäßig, die Kupplungskugel mit einer Oberflächenschicht zu versehen, welche härter als die Kupplungskugel ist, so daß durch die Oberflächenschicht sichergestellt ist, daß die Oberfläche der Kupplungskugel, welche durch das anhängerseitige Kupplungsteil erheblichen Belastungen ausgesetzt ist, diesen Belastungen über lange Zeit Stand hält.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines ersten Ausführungsbeispiels einer erfindungsgemäßen Anhängevorrichtung;
- Fig. 2: einen Schnitt längs Linie 2-2 in Fig. 1;
- Fig. 3: eine teilweise geschnitten dargestellte Seitenansicht ähnlich Fig. 1 eines zweiten Ausführungsbeispiels;

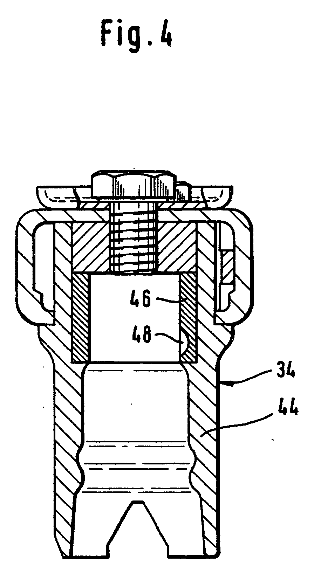

- Fig. 4: einen Schnitt in einer vertikalen Ebene durch eine Aufnahmehülse des zweiten Ausführungsbeispiels;
- Fig. 5: eine teilweise geschnitten dargestellte Ansicht ähnlich Fig. 1 eines dritten Ausführungsbeispiels;
- Fig. 6: eine teilweise geschnitten dargestellte Ansicht ähnlich Fig. 1 eines vierten Ausführungsbeispiels und
- Fig. 7: eine Ansicht von unten auf ein fünftes Ausführungsbeispiel.

Eine erfindungsgemäße Anhängevorrichtung besteht im wesentlichen aus einem Kugelhals 10 mit Kupplungskugel 20 und aus Befestigungsmitteln 30, mit welchen der Kugelhals 20 lösbar gehalten ist und mit welchen die Anhängevorrichtung am Heck eines Fahrzeugs befestigbar ist.

Vorzugsweise ist das Grundmaterial des aus Kugelhals 10 und Kupplungskugel 20 gebildeten Teils aus geschmiedetem Aluminium. Zur Erhöhung der Festigkeit können gegebenenfalls noch Elemente oder Teile aus Stahl an- oder eingeschmiedet werden. Beispielsweise ist es möglich, die Kupplungskugel 20 mit einem Stahlabsatz zu versehen oder die Kupplungskugel 20 aus Stahl mit einem Ansatz an einem anhängerseitigen Ende des Kugelhalses 10 einzuschmieden oder es ist alternativ dazu ebenfalls möglich, die Kupplungskugel 20 mit einer Hartbeschichtung zu versehen, wie die nachfolgenden Ausführungsbeispiele im einzelnen zeigen.

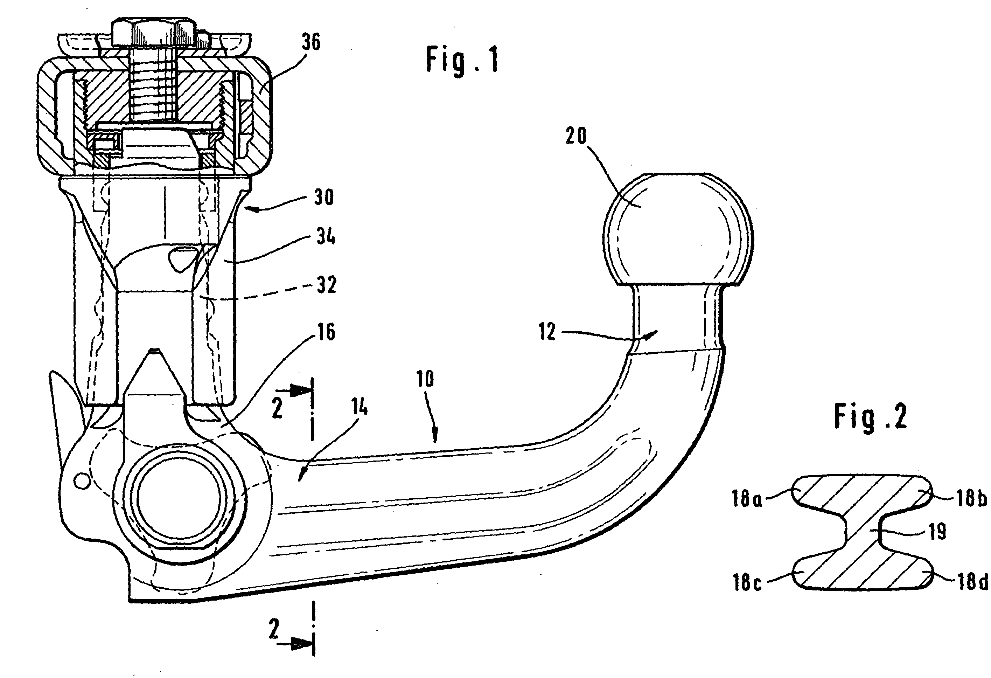

Ein in Fig. 1 dargestelltes Ausführungsbeispiel einer erfindungsgemäßen Anhängevorrichtung umfaßt den Kugelhals 10, welcher ein erstes anhängerseitiges Ende 12 aufweist, das die Kupplungskugel 20 trägt. An einem zweiten, dem anhängerseitigen Ende 12 gegenüberliegenden Ende 14 des Kugelhalses 10 ist der Kugelhals 10 mit einem Gehäusekörper 16 versehen, welcher einen zeichnerisch nicht im einzelnen dargestellten Verriegelungsmechanismus aufnimmt.

Die Befestigungsmittel 30 umfassen einen an das Ende 14 des Kugelhalses 10 vorzugsweise einstückig angeformten Schaft 32, welcher lösbar in einer Aufnahmehülse 34 fixierbar ist, die ihrerseits dadurch fahrzeugfest angeordnet ist, daß sie an einem ungefähr parallel zum Stoßfänger verlaufenden Querträger 36 gehalten ist, über welchen eine Verbindung zur Fahrzeugkarosserie erfolgt.

Um dem Kugelhals eine möglichst große Stabilität zu verleihen, ist der Kugelhals, wie in Fig. 2 dargestellt, im Querschnitt doppel-T-förmig ausgebildet und weist seitliche Längsrippen 18a, b, c, d auf, welche von einem Zentralkörper 19 seitlich abstehen.

Bei dem einfachsten, in Fig. 1 dargestellten Ausführungsbeispiel sind sowohl die gesamte Kupplungskugel 20 als auch der Kugelhals 10 sowie der Schaft 32, die Aufnahmehülse 34 und der Querträger 36 aus Leichtmetall, vorzugsweise Aluminium oder einer Aluminiumlegierung hergestellt, ohne daß zusätzliche Maßnahmen vorgesehen sind.

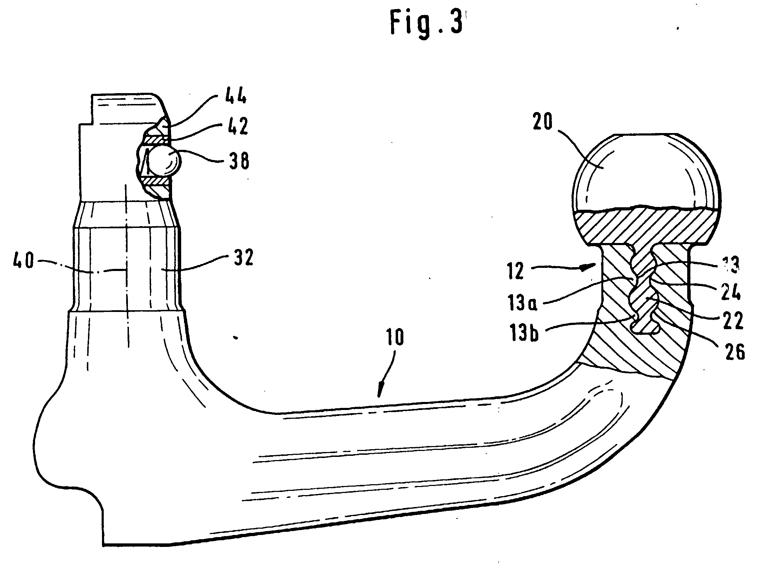

Bei einem zweiten Ausführungsbeispiel, dargestellt in Fig. 3, ist die gesamte Kupplungskugel 20 aus Stahl hergestellt und weist einen Ansatz 22, beispielsweise ebenfalls aus Stahl, auf, welcher mit der Kupplungskugel 20 fest verbunden, beispielsweise einstückig an die Kupplungskugel 20 angeformt, ist und sich in eine entsprechend geformte Ausnehmung 13 in dem ersten Ende 12 des Kugelhalses 10 hineinerstreckt.

Vorzugsweise ist der Ansatz 22 mit mehreren Hinterschneidungen 24, 26 versehen, in welche Vorsprünge 13a, 13b der Ausnehmung 13 eingreifen, die dadurch entstehen, daß der Ansatz 22 in das erste Ende 12 eingeschmiedet wurde, wozu bei beispielsweise zunächst zylindrischer Ausnehmung 13 und in diesen eingeführten Ansatz 22 beim Schmieden im Bereich des ersten Endes 12 das Material in die Hinterschneidungen 24, 26 unter Bildung der Vorsprünge 13a, b eingeflossen ist und sich außerdem die Ausnehmung 13 soweit verengt hat, daß sie im wesentlichen vollumfänglich an einer Außenseite des Ansatzes 22 anliegt.

Wie ferner in Fig. 3 dargestellt, ist vorzugsweise zur Fixierung des Schafts 32 in der Aufnahmehülse 34 ein Fixierkörper 38 im Schaft 32 vorgesehen, welche radial zu einer Mittelachse 40 des Schaftes 32 zur Fixierung desselben in der Aufnahmehülse 34 bewegbar ist.

Dieser beispielsweise als Kugel ausgebildete Fixierkörper 38 führt im Bereich seiner Lagerung innerhalb des Schaftes zu sehr hohen lokalen Flächenpressungen, so daß vorzugsweise als Aufnahme für die Fixierkugel 38 in dem Schaft 32 ein Einsatz 42, beispielsweise ein Einsatzring aus Stahl, vorgesehen ist, welcher die Kugel 38 aufnimmt und somit zu einer Verteilung von lokal hohen Oberflächenbelastungen, die durch die Kugel 38 entstehen, auf das Leichtmetall des Körpers 44 des Schafts 32 führen.

In gleicher Weise ist in die Aufnahmehülse 34 ein Einsatz 46 aus Stahl eingesetzt, welcher eine Tasche 48 aufweist, in welche die Kugel eingreift, so daß auch lokal hohe Flächenpressungen durch die Kugeln 38 im Bereich der Taschen 48 durch den Einsatz 46 auf das Leichtmetall des Körpers 44 der Aufnahmehülse 34 verteilt werden.

Bei dem zweiten Ausführungsbeispiel sind der Kugelhals 10 und der Schaft 32 einstückig und aus Leichtmetall hergestellt. Die hohen Verschleißbeanspruchungen ausgesetzte Kupplungskugel 20 ist dagegen aus Stahl hergestellt und durch den einstückig angeformten Ansatz 22 in dem ersten Ende 12 des Kugelhalses 10 verankert (Fig. 3).

Ferner ist die Kugel 38 durch den hohe Flächenpressungen standhaltenden Einsatz 42 in Körper 44 des Schafts 32 geführt, um eine lokale Deformation des Leichtmetalls des Körpers 44 zu vermeiden.

In gleicher Weise wie beim ersten Ausführungsbeispiel ist die Hülse 34, insoweit als deren Körper 44 betroffen ist, nach wie vor aus Leichtmetall ausgebildet, allerdings ist durch den Einsatz 46 aus Stahl sichergestellt, daß auch hier die hohen Flächenpressungen durch die Kugel 38 nicht zu einer Deformation des Leichtmetalls führen (Fig. 3).

Im übrigen ist das zweite Ausführungsbeispiel in gleicher Weise ausgebildet wie das erste Ausführungsbeispiel, so daß auf die Ausführungen hierzu vollinhaltlich Bezug genommen werden kann.

Alternativ zum Einschmieden des Ansatzes 22 in das erste Ende 12 des Kugelhalses 10, ist es aber ebenfalls denkbar, den Ansatz 22 einzuschrumpfen oder einzukleben oder anderweitig formschlüssig im ersten Ende 12, beispielsweise durch Verstiften zu verankern.

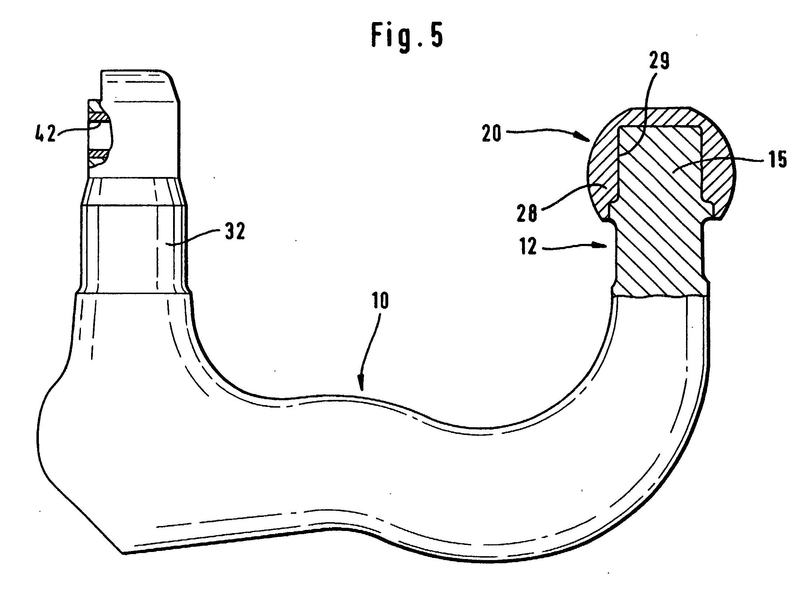

Bei einem dritten Ausführungsbeispiel, dargestellt in Fig. 5 ist die Kupplungskugel 20 gebildet durch einen kappenähnlichen Aufsatz 28 aus Stahl, welcher beispielsweise die Kugeloberfläche der Kupplungskugel 20 bildet. Dieser Aufsatz 28 weist eine zentrale Ausnehmung 29 auf, in welche ein einstückig an das erste Ende 12 des Kugelhalses 10 angeformter Fortsatz 15 eingreift, welcher von dem Aufsatz 28 übergriffen ist.

Der Aufsatz 28 kann dabei sowohl formschlüssig als auch kraftschlüssig oder auch durch Kleben an dem Fortsatz 15 fixiert sein.

Der Fortsatz 15 ist in gleicher Weise wie der gesamte Kugelhals 10 und der Schaft 32 aus Leichtmetall ausgebildet.

Beispielsweise ist es ebenfalls bei diesem Ausführungsbeispiel vorteilhaft, die Einsätze 42 für die Lagerung der Kugel 38 zu verwenden.

Im übrigen ist das dritte Ausführungsbeispiel in gleicher Weise ausgebildet wie das zweite Ausführungsbeispiel, so daß bezüglich der übrigen Merkmale auf das zweite Ausführungsbeispiel vollinhaltlich Bezug genommen werden kann.

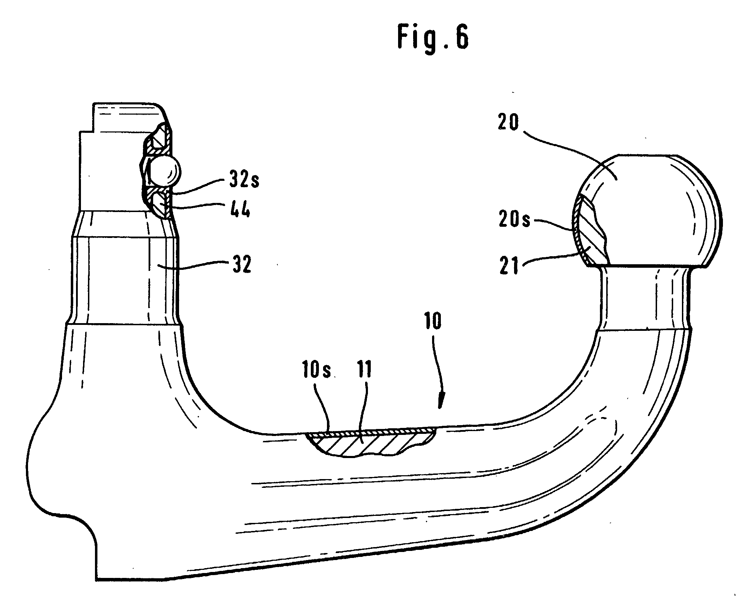

Bei einem vierten Ausführungsbeispiel, dargestellt in Fig. 6, ist ein Körper 21 der Kupplungskugel 20 aus Leichtmetall ausgebildet, allerdings mit einer Oberflächenschicht 20s versehen, welche aus einem Material ist, welches härter als das Leichtmetall des Körpers 21 der Kupplungskugel 20 ist. In gleicher Weise ist auch der Schaft 32 mit einer Oberflächenschicht 32s versehen, welche aus einem Material ist, welches härter als der Körper 44 des Schafts 32 aus Leichtmetall ist.

Beide Oberflächenschichten 20s und 32s lassen sich vorzugsweise im selben Verfahrenszug herstellen, wobei die Oberflächenschicht 20s den Vorteil hat, daß es trotz verbesserter Materialeigenschaften gegenüber dem den Körper 21 bildenden Leichtmetall nicht erforderlich ist, ein aufwendiges Stahlteil, sei es in Form der gesamten Kupplungskugel 20 oder in Form des Aufsatzes 28, einzusetzen. In gleicher Weise können auch beim Schaft 32 durch die Oberflächenschicht 32s die Einsätze 42 vermieden werden.

Darüber hinaus ist es bei diesem Ausführungsbeispiel auch noch vorteilhaft, wenn der Kugelhals 10 mit einer Oberflächenschicht 10s versehen ist, welche eine höhere Festigkeit als das Material im Körper 11 des Kugelhalses 10 aufweist, so daß durch diese Oberflächenschicht 10s insgesamt die Formstabilität des Kugelhalses 10 verbessert ist und somit beispielsweise ein Querschnitt desselben geringer ausgeführt werden kann als ohne die vorgesehene Oberflächenschicht 10s.

Im übrigen ist das vierte Ausführungsbeispiel gemäß Fig. 6 ähnlich ausgebildet wie das zweite und das dritte Ausführungsbeispiel, so daß bezüglich der Beschreibung der bislang nicht im einzelnen genannten Merkmale vollinhaltlich auf diese Ausführungsbeispiele Bezug genommen werden kann.

Die Oberflächenschichten 20s, 32s und 10s sind in unterschiedlichster Weise herstellbar.

So ist es beispielsweise denkbar, diese Oberflächenschichten durch eine Nitrierhärtung des Leichtmetalls herzustellen, wobei die Nitrierhärtung vorzugsweise im Vakuum mittels Ionenbeschuß im Plasma eine Koronaentladung erfolgt. Bei diesem Verfahren wird letztendlich eine Stickstoffdiffusion in das Gefüge des Leichtmetalls erreicht.

Alternativ dazu ist es denkbar, die Oberflächenschichten durch eine Oxidkeramikschicht, welche einen innigen Verbund mit dem Leichtmetall des jeweiligen Körpers eingeht, auszubilden. Hierbei wird durch ein plasmachemisches Verfahren unter Einwirkung eines Elektrolyten ein anodisches Oxidieren durchgeführt, wobei Oxidkeramikschichten entstehen.

Eine andere Alternative ist das Aufbringen plasmapolymerer Schichten, wobei auf dem jeweiligen Körper organische polymerähnliche Schichten mittels einer elektrischen Gasentladung aufgebracht werden.

Eine weitere Möglichkeit zum Herstellen dieser Schichten ist das Aufbringen kunststoffkeramischer Schichten, welche sowohl eine hohe Härte als auch eine hohe Korrosionsbeständigkeit aufweisen.

Eine weitere Alternative zum Herstellen derartiger Schichten ist das Aufbringen einer Schicht durch anodisches Oxidieren und der Herstellung von Leichtmetalloxidschichten mit niedrigem Porenvolumen.

Eine weitere Möglichkeit zum Herstellen dieser Schichten stellt das chemische Vernickeln dar, bei welchem die Oberfläche des Körpers mit einer gute Verschleißschutzeigenschaften aufweisenden Nickelschicht überzogen werden.

Hinsichtlich der Ausbildung der Körper selber und insbesondere der Formgebung der Körper wurden bislang keine näheren Angaben gemacht. So sieht eine vorteilhafte Möglichkeit vor, die Leichtmetallkörper im Gesenk zu schmieden, wobei das Schmieden den großen Vorteil hat, daß dabei definierte Fließlinien erzeugbar sind, welche ebenfalls noch die Möglichkeit eröffnen, die gewünschten Festigkeitseigenschaften sowohl im Kugelhals als auch gegebenenfalls in der Kupplungskugel oder auch im Schaft zu erzeugen.

Alternativ zum Schmieden der Teile aus Leichtmetall sieht eine weitere Alternative vor, die Teile aus Leichtmetall durch das sogenannte "semi solid metal casting" oder auch "thixo casting" genannt, herzustellen. Dieses Verfahren erfordert spezielle Legierungen, die im Stranggußverfahren, kombiniert mit elektromagnetischem Rühren, aufbereitet werden, wobei dieser Prozeß das Entstehen von Dendriten verhindert, so daß die Kristallkörner in Kügelchen umgewandelt werden. Diese Kügelchen verleihen der Legierung spezielle Eigenschaften im halbflüssigen Zustand, in dem die aufgeheizten Rohmaterialstücke ihre äußere Form bewahren, jedoch unter Druck fließen wie eine Flüssigkeit.

Dieses Material läßt sich in besonderer Form in ein Werkzeug pressen, wobei trotz hoher Füllgeschwindigkeiten keine Turbulenzen auftreten und somit ein Gefüge entsteht, das eine hohe mechanische Belastbarkeit, vergleichbar mit geschmiedetem Material, aufweist.

Für dieses Verfahren kommen vorzugsweise sogenannte "Thixo-Legierungen" zum Einsatz, welche Al, Si und Mg in verschiedenen Zusammensetzungen aufweisen.

Alternativ zum sogenannten "semi solid metal casting" ist es aber auch denkbar, ein Preßgießverfahren, beispielsweise ein sogenanntes "squeeze casting" oder Vacuralgießverfahren durchzuführen, bei welchem ebenfalls Gefüge entstehen, die hinsichtlich ihrer Festigkeit den Gefügen geschmiedeter Bauteile entsprechen.

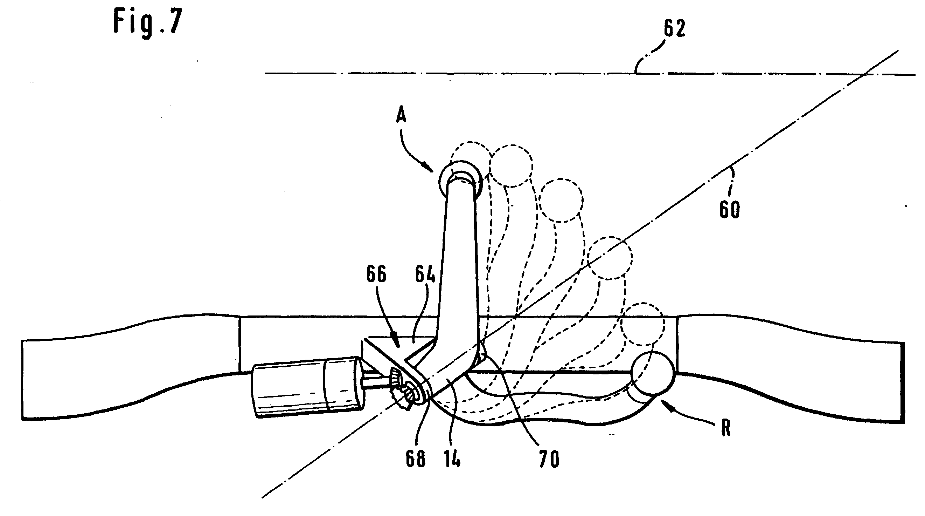

Bei einem fünften Ausführungsbeispiel, dargestellt in Fig. 7, ist der Kugelhals 10 mit der Kupplungskugel 20 nicht abnehmbar, sondern gegenüber dem Querträger 36 verschwenkbar und zwar um eine Achse 60, welche sowohl in einem spitzen Winkel zu einer horizontalen Längsachse 62 des Fahrzeugs als auch zu einer lotrechten Achse verläuft, wie in der deutschen Patentanmeldung P 196 12 959.1 beschrieben.

In diesem Fall umfassen die Befestigungsmittel 30 einen an das Ende 14 des Kugelhalses 10 angeformten Lagerkörper 64, welcher an einem Lagerblock 66, beispielsweise zwischen zwei Lagerflanschen 68, 70, um die Achse 60 drehbar gelagert ist.

Dabei ist der Kugelhals 10 mitsamt der Kupplungskugel 20 von einer Arbeitsstellung A in eine ebenfalls durchgezogen gezeichnete Ruhestellung R schwenkbar, in welcher der Kugelhals 10 ungefähr in Richtung des Querträgers 36 und somit quer zur horizontalen Längsachse des Fahrzeugs liegt.

Auch bei diesem Ausführungsbeispiel eines verschwenkbaren Kugelhalses 10 sind alle im Zusammenhang mit dem ersten bis vierten Ausführungsbeispiel beschriebenen Varianten der Ausbildung des Kugelhalses 10 und der Kupplungskugel 20 denkbar, so daß diesbezüglich vollinhaltlich auf die Ausführungen hierzu Bezug genommen wird.

## Patentansprüche

1. Anhängevorrichtung, insbesondere für Personenkraftwagen, umfassend einen Kugelhals, eine an einem ersten anhängerseitigen Ende des Kugelhalses angeordnete Kupplungskugel und ein an einem zweiten Ende des Kugelhalses angeordnetes und diesen am Fahrzeug haltendes Befestigungsmittel,
**dadurch gekennzeichnet, daß** zumindest der Kugelhals (10) aus Leichtmetall hergestellt ist und daß die Kupplungskugel (20) aus einem verschleißfesterem Material als Leichtmetall hergestellt ist.

2. Anhängevorrichtung nach Anspruch 1, **dadurch gekennzeichnet, daß** das Leichtmetall Aluminium oder eine seiner Legierungen ist.

3. Anhängevorrichtung nach Anspruch 1 oder 2, **dadurch gekennzeichnet, daß** das verschleißfestere Material als Leichtmetall Stahl ist.

4. Anhängekupplung nach Anspruch 1 oder 2, **dadurch gekennzeichnet, daß** das verschleißfestere Material als Leichtmetall Keramik ist.

5. Anhängevorrichtung nach einem der voranstehenden Ansprüche, **dadurch gekennzeichnet, daß** die Kupplungskugel (20) durch einen Aufsatz (28) aus dem verschleißfesteren Material als Leichtmetall gebildet ist.

6. Anhängevorrichtung nach Anspruch 5, **dadurch gekennzeichnet, daß** der Aufsatz (28) einen Fortsatz (15) des Kugelhalses (10) kappenähnlich übergreift.

7. Anhängevorrichtung nach Anspruch 6, **dadurch gekennzeichnet, daß** der Fortsatz (15) einstückig an das anhängerseitige erste Ende (12) des Kugelhalses (10) angeformt ist.

8. Anhängevorrichtung nach einem der Ansprüche 6 oder 7, **dadurch gekennzeichnet, daß** der Aufsatz (28) formschlüssig an dem Fortsatz (15) gehalten ist.

9. Anhängevorrichtung nach Anspruch 6 oder 7, **dadurch gekennzeichnet, daß** der Aufsatz (28) kraftschlüssig an dem Fortsatz (15) gehalten ist.

10. Anhängevorrichtung nach einem der Ansprüche 1 bis 5, **dadurch gekennzeichnet, daß** die Kupplungskugel (20) einen Ansatz (22) aufweist, welcher mit dem Kugelhals (10) verbunden ist.

11. Anhängevorrichtung nach Anspruch 10, **dadurch gekennzeichnet, daß** der Ansatz (22) formschlüssig mit dem Kugelhals (10) verbunden ist.

12. Anhängevorrichtung nach Anspruch 10, **dadurch gekennzeichnet, daß** der Ansatz (22) kraftschlüssig mit dem Kugelhals (10) verbunden ist.

13. Anhängevorrichtung nach einem der Ansprüche 10 bis 12, **dadurch gekennzeichnet, daß** der Ansatz (22) in den Kugelhals (10) eingeschmiedet ist.

14. Anhängevorrichtung nach einem der voranstehenden Ansprüche, **dadurch gekennzeichnet, daß** der Kugelhals (10) beiderseits mit Längsrippen (18) versehen ist.

15. Anhängevorrichtung nach einem der voranstehenden Ansprüche, **dadurch gekennzeichnet, daß** der Kugelhals (10) im Anschluß an das zweite Ende (14) zumindest abschnittsweise im Querschnitt doppel-T-förmig ausgebildet ist.

16. Anhängevorrichtung nach einem der voranstehenden Ansprüche, **dadurch gekennzeichnet, daß** der Kugelhals (10) mit einer Oberflächenschicht (32s) versehen ist, welche aus härterem Material als das Leichtmetall eines Körpers (11) des Kugelhalses (10) ist.

17. Anhängevorrichtung nach einem der voranstehenden Ansprüche, **dadurch gekennzeichnet, daß** durch das Befestigungsmittel (30) der Kugelhals (10) abnehmbar ist.

18. Anhängevorrichtung nach Anspruch 17, **dadurch gekennzeichnet, daß** das Befestigungsmittel (30) einen an dem zweiten Ende (14) des Kugelhalses (10) angeordneten Schaft (32) umfaßt, welcher in eine fahrzeugfeste Aufnahmehülse (34) einsetzbar ist.

19. Anhängevorrichtung nach Anspruch 18, **dadurch gekennzeichnet, daß** der Schaft (32) aus Leichtmetall hergestellt ist.

20. Anhängevorrichtung nach Anspruch 18 oder 19, **dadurch gekennzeichnet, daß** der Schaft (32) einstückig an den Kugelhals (10) angeformt ist.

21. Anhängevorrichtung nach einem der Ansprüche 18 bis 20, **dadurch gekennzeichnet, daß** der Schaft (32) mit einer Oberflächenschicht (32s) versehen ist, welche aus härterem Material als das Leichtmetall eines Körpers (44) des Schaftes (32) ist.

22. Anhängevorrichtung nach einem der Ansprüche 18 bis 21, **dadurch gekennzeichnet, daß** im Schaft (32) vorgesehene Anlageflächen für Verriegelungselemente (38) eine Oberflächenschicht (32s) aufweisen, welche aus härterem Material als das Leichtmetall des Körpers (44) des Schafts (32) ist.

23. Anhängevorrichtung nach einem der Ansprüche 18 bis 21, **dadurch gekennzeichnet, daß** die Anlageflächen für Verriegelungselemente (38) durch in den Schaft (32) eingesetzte Einsatzteile (42) aus einem eine höhere Oberflächenfestigkeit als Leichtmetall aufweisenden Material ausgebildet sind.

24. Anhängevorrichtung nach einem der Ansprüche 18 bis 23, **dadurch gekennzeichnet, daß** die Aufnahmehülse (34) aus Leichtmetall ist.

25. Anhängevorrichtung nach Anspruch 24, **dadurch gekennzeichnet, daß** die Aufnahmehülse (34) eine Oberflächenschicht aufweist, welche aus einem Material ist, das härter als das Leichtmetall des Körpers (48) der Aufnahmehülse ist.

26. Anhängevorrichtung nach Anspruch 24 oder 25, **dadurch gekennzeichnet, daß** die Aufnahmehülse (34) Anlageflächen für Verriegelungselemente (38) aufweist, welche aus einem härteren Material als das Leichtmetall des Körpers (48) der Aufnahmehülse (34) ist.

27. Anhängevorrichtung nach einem der Ansprüche 1 bis 16, **dadurch gekennzeichnet, daß** der Kugelhals relativ zum Fahrzeug um eine Achse (60) verschwenkbar ist.

28. Anhängevorrichtung nach Anspruch 27, **dadurch gekennzeichnet, daß** das Befestigungsmittel (30) ein Schwenklager (64, 66) umfaßt, dessen Lagerkörper (64) am Kugelhals (10) gehalten ist.

29. Anhängevorrichtung nach Anspruch 28, **dadurch gekennzeichnet, daß** der an dem Kugelhals (10) gehaltene Lagerkörper (64) des Befestigungsmittels (30) aus Leichtmetall hergestellt ist.

30. Anhängevorrichtung nach Anspruch 29, **dadurch gekennzeichnet, daß** der Lagerkörper (64) einstückig an den Kugelhals (10) angeformt ist.

31. Anhängevorrichtung nach einem der voranstehenden Ansprüche, **dadurch gekennzeichnet, daß** der Kugelhals (10) als im Gesenk geschmiedetes Teil hergestellt ist.

32. Anhängevorrichtung nach Anspruch 31, **dadurch gekennzeichnet, daß** an dem Kugelhals (10) angeformte Elemente (20, 15, 32, 64) aus Leichtmetall als zusammen mit dem Kugelhals (10) hergestellte, im Gesenk geschmiedete Teile hergestellt sind.

33. Anhängevorrichtung nach einem der Ansprüche 1 bis 30, **dadurch gekennzeichnet, daß** der Kugelhals (10) durch ein Pressgießverfahren hergestellt ist.

34. Anhängevorrichtung nach Anspruch 33, **dadurch gekennzeichnet, daß** die an dem Kugelhals (10) angeformten Elemente (20, 15, 32, 64) aus Leichtmetall zusammen mit dem Kugelhals (10) durch ein Pressgießverfahren hergestellt sind.

35. Anhängevorrichtung nach einem der Ansprüche 1 bis 30, **dadurch gekennzeichnet, daß** der Kugelhals (10) durch eine Art Flüssigschmieden hergestellt ist.

36. Anhängevorrichtung nach Anspruch 35, **dadurch gekennzeichnet, daß** die an dem Kugelhals (10) angeformten Elemente (20, 15, 32, 64) aus Leichtmetall zusammen mit dem Kugelhals (10) durch eine Art Flüssigschmieden hergestellt sind.

37. Anhängevorrichtung nach einem der voranstehenden Ansprüche, **dadurch gekennzeichnet, daß** die Oberflächenschicht (20s, 10s, 32s) aus durch eindiffundieren von Stoffen verfestigtem härterem Material als Leichtmetall eine Schicht aus vergütetem Leichtmetall des jeweiligen Körpers (21, 11, 44) ist.

38. Anhängevorrichtung nach Anspruch 37, **dadurch gekennzeichnet, daß** die verfestigte Oberflächenschicht (20s, 10s, 32s) durch Nitrieren hergestellt ist.

39. Anhängevorrichtung nach einem der Ansprüche 1 bis 36, **dadurch gekennzeichnet, daß** die Oberflächenschicht (20s, 10s, 32s) aus härterem Material als Leichtmetall durch eine Keramikschicht gebildet ist.

40. Anhängevorrichtung nach Anspruch 39, **dadurch gekennzeichnet, daß** die Keramikschicht eine Kunststoffkeramikschicht ist.

41. Anhängevorrichtung nach Anspruch 39, **dadurch gekennzeichnet, daß** die Keramikschicht eine oxidkeramische Schicht ist.

42. Anhängevorrichtung nach einem der Ansprüche 1 bis 16, **dadurch gekennzeichnet, daß** die Oberflächenschicht (20s, 10s, 32s) durch Vernickelung erhältlich ist.

43. Anhängevorrichtung nach Anspruch 42, **dadurch gekennzeichnet, daß** die Vernickelung im Wege einer chemischen Vernickelung erfolgt.

44. Anhängevorrichtung nach einem der voranstehenden Ansprüche, **dadurch gekennzeichnet, daß** die Kupplungskugel (20) mit einer Oberflächenschicht (20s) versehen ist, welche aus härterem Material als die Kupplungskugel (20) ist.

## Claims

1. A towing device, especially for motor cars, comprising a ball neck (10), a coupling ball (20) arranged at a first end (12) of the ball neck (10) at the trailer side thereof and an attachment means (30) arranged at a second end (14) of the ball neck (10) for fixing it to the vehicle,
**characterised in that** at least the ball neck (10) is made of a light metal and **in that** the coupling ball (20) is made of a material which is more wear-resistant than light metal.

2. A towing device in accordance with Claim 1, **characterised in that** the light metal is aluminium or an alloy thereof.

3. A towing device in accordance with claim 1 or 2, **characterised in that** the material which is more wear-resistant than light metal is steel.

4. A towing device in accordance with claim 1 or 2, **characterised in that** the material which is more wear-resistant than light metal is ceramic.

5. A towing device in accordance with any of the preceding claims, **characterised in that** the coupling ball (20) is formed by a cap (28) made of the material which is more wear-resistant than light metal.

6. A towing device according to claim 5, **characterised in that** the cap (28) caps an extension (15) of the ball neck (10).

7. A towing device according to claim 6, **characterised in that** the extension (15) is formed in one piece on the trailer-side first end (12) of the ball neck (10).

8. A towing device in accordance with any one of claims 6 to 7, **characterised in that** the cap (28) is held in form-fitting manner on the extension (15).

9. A towing device in accordance with claim 6 or 7, **characterised in that** the cap (28) is held in force-locking manner on the extension (15).

10. A trailer device in accordance with any of claims 1 to 5, **characterised in that** the coupling ball (20) comprises a lug (22) which is connected to the ball neck (10).

11. A towing device in accordance with claim 10, **characterised in that** the lug (22) is connected in form-fitting manner to the ball neck (10).

12. A towing device in accordance with claim 10, **characterised in that** the lug (22) is connected in force-locking manner to the ball neck (10).

13. A towing device in accordance with any of claims 10 to 12, **characterised in that** the lug (22) is forged into the ball neck (10).

14. A towing device in accordance with any of the preceding Claims, **characterised in that** the ball neck (10) is provided with longitudinal ribs (18) on both sides thereof.

15. A towing device in accordance with any of the preceding Claims, **characterised in that** the ball neck (10) has a double T-shaped cross-section in at least sections thereof adjoining the second end (14).

16. A towing device in accordance with any of the preceding Claims, **characterised in that** the ball neck (10) is provided with a surface layer (32s) which consists of a harder material than the light metal of a body (11) of the ball neck (10).

17. A towing device in accordance with any of the preceding Claims, **characterised in that** the ball neck (10) is removable by the attachment means (30).

18. A towing device in accordance with Claim 17, **characterised in that** the attachment means (30) comprises a shank (32) which is arranged at the second end (14) of the ball neck (10) and is insertible into a seating sleeve (34) that is rigidly attached to the vehicle.

19. A towing device in accordance with Claim 18, **characterised in that** the shank (32) is made of a light metal.

20. A towing device in accordance with Claim 18 or 19, **characterised in that** the shank (32) is formed in one piece with the ball neck (10).

21. A towing device in accordance with any of Claims 18 to 20, **characterised in that** the shank (32) is provided with a surface layer (32s) which consists of a harder material than the light metal of a body (44) of the shank (32).

22. A towing device in accordance with any of Claims 18 to 21, **characterised in that** bearing surfaces that are provided in the shank (32) for locking elements (38) comprise a surface layer (32s) which consists of a harder material than the light metal of the body (44) of the shank (32).

23. A towing device in accordance with any of Claims 18 to 21, **characterised in that** the bearing surfaces for the locking elements (38) are formed by insert members (42) that are inserted into the shank (32) and consist of a material having a higher surface strength than that of a light metal.

24. A towing device in accordance with any of Claims 18 to 23, **characterised in that** the seating sleeve (34) consists of a light metal.

25. A towing device in accordance with Claim 24, **characterised in that** the seating sleeve (34) comprises a surface layer which is made of a material that is harder than the light metal of the body (48) of the seating sleeve.

26. A towing device in accordance with Claim 24 or 25, **characterised in that** the seating sleeve (34) comprises bearing surfaces for locking elements (38) which is of a harder material than the light metal of the body (48) of the seating sleeve (34).

27. A towing device in accordance with any of Claims 1 to 16, **characterised in that** the ball neck is pivotal relative to the vehicle about an axis (60).

28. A towing device in accordance with Claim 27, **characterised in that** the attachment means (30) comprises a pivotal bearing (64, 66) whose bearing body (64) is held on the ball neck (10).

29. A towing device in accordance with Claim 28, **characterised in that** the bearing body (64) of the attachment means (30) that is held on the ball neck (10) is made of a light metal.

30. A towing device in accordance with Claim 29, **characterised in that** the bearing body (64) is formed in one piece with the ball neck (10).

31. A towing device in accordance with any of the preceding Claims, **characterised in that** the ball neck (10) is produced in the form of a drop forged part.

32. A towing device in accordance with Claim 31, **characterised in that** elements (20, 15, 32, 64) that are formed on the ball neck (10) are made of a light metal and are produced together with the ball neck (10) in the form of drop forged parts.

33. A towing device in accordance with any of Claims 1 to 30, **characterised in that** the ball neck (10) is produced by means of a high pressure die casting process.

34. A towing device in accordance with Claim 33, **characterised in that** the elements (20, 15, 32, 64) formed on the ball neck (10) are produced from a light metal together with the ball neck (10) by means of a high pressure die casting process.

35. A towing device in accordance with any of Claims 1 to 30, **characterised in that** the ball neck (10) is produced by means of a form of fluidic forging.

36. A towing device in accordance with Claim 35, **characterised in that** the elements (20, 15, 32, 64) formed on the ball neck (10) are produced from a light metal together with the ball neck (10) by means of a form of fluidic forging.

37. A towing device in accordance with any of the preceding Claims, **characterised in that** the surface layer (20s, 10s, 32s), which consists of material that is harder than a light metal and the hardness of which was increased by diffusing substances thereinto, is a layer of hardened light metal of the respective body (21, 11, 44).

38. A towing device in accordance with Claim 37, **characterised in that** the hardened surface layer (20s, 10s, 32s) is produced by a nitrifying process.

39. A towing device in accordance with any of Claims 1 to 36, **characterised in that** the surface layer (20s, 10s, 32s) consisting of a harder material than a light metal is formed by a ceramic layer.

40. A towing device in accordance with Claim 39, **characterised in that** the ceramic layer is a layer of a synthetic ceramic material.

41. A towing device in accordance with Claim 39, **characterised in that** the ceramic layer is an oxide-ceramic layer.

42. A towing device in accordance with any of Claims 1 to 16, **characterised in that** the surface layer (20s, 10s, 32s) is obtainable by means of a nickel plating process.

43. A towing device in accordance with Claim 42, **characterised in that** the nickel plating process is effected in the manner of a chemical nickel plating process.

44. A towing device in accordance with any preceding claim, **characterised in that** the coupling ball (20) is provided with a surface layer (20s), which is of a harder material than the coupling ball (20).

## Revendications

1. Dispositif d'attelage, notamment pour voitures de tourisme, comprenant un col porte-boule, une boule d'attelage disposée sur une première extrémité (12) du col porte-boule, située côté remorque, et un moyen de fixation disposé sur une seconde extrémité du col porte-boule et retenant ce dernier sur le véhicule, **caractérisé en ce qu'**au moins le col porte-boule (10) est réalisé en un métal léger et la boule d'attelage (20) est réalisée en un matériau plus résistant à l'usure que le métal léger.

2. Dispositif d'attelage selon la revendication 1, **caractérisé en ce que** le métal léger est de l'aluminium ou l'un de ses alliages.

3. Dispositif selon la revendication 1 ou 2, **caractérisé en ce que** le matériau plus résistant à l'usure que le métal léger est de l'acier.

4. Dispositif d'attelage selon la revendication 1 ou 2, **caractérisé en ce que** le matériau plus résistant à l'usure que le métal léger est de la céramique.

5. Dispositif d'attelage selon l'une quelconque des revendications précédentes, **caractérisé en ce que** la boule d'attelage (20) est formée par un élément de recouvrement (28) réalisé en un matériau plus résistant à l'usure que le métal léger.

6. Dispositif d'attelage selon la revendication 5, **caractérisé en ce que** l'élément de recouvrement (28) recouvre un prolongement (15) du col porte-boule (10) à la manière d'un chapeau.

7. Dispositif d'attelage selon la revendication 6, **caractérisé en ce que** le prolongement (165) est formé d'un seul tenant sur la première extrémité (12), située côté remorque, du col porte-boule (10).

8. Dispositif d'attelage selon l'une quelconque des revendications 6 ou 7, **caractérisé en ce que** le prolongement (28) est maintenu de manière solidaire avec correspondance de forme sur le prolongement (15).

9. Dispositif d'attelage selon la revendication 6 ou 7, **caractérisé en ce que** le prolongement (28) est maintenu de manière solidaire par une liaison dynamique sur le prolongement (15).

10. Dispositif d'attelage selon l'une quelconque des revendications 1 à 5, **caractérisé en ce que** la boule d'attelage (20) présente une partie saillante (22) qui est reliée avec le col porte-boule (10).

11. Dispositif d'attelage selon la revendication 10, **caractérisé en ce que** la partie saillante (22) est relié de manière solidaire avec correspondance de forme avec le col porte-boule (10).

12. Dispositif d'attelage selon la revendication 10, **caractérisé en ce que** la partie saillante (22) est reliée de manière solidaire par une liaison dynamique avec le col porte-boule (10).

13. Dispositif d'attelage selon l'une quelconque des revendications 10 à 12, **caractérisé en ce que** la partie saillante (22) est matricée dans le col porte-boule (10).

14. Dispositif d'attelage selon l'une quelconque des revendications précédentes, **caractérisé en ce que** le col porte-boule (10) est muni de chaque côté de nervures longitudinales (18).

15. Dispositif d'attelage selon l'une quelconque des revendications précédentes, **caractérisé en ce que** le col porte-boule (10) faisant suite à la seconde extrémité (14) a au moins par endroits une section en forme de double T.

16. Dispositif d'attelage selon l'une quelconque des revendications précédentes, **caractérisé en ce que** le col porte-boule (10) est pourvu d'une couche superficielle (32s) qui est réalisée en un matériau plus dur que le métal léger d'un corps (11) du col porte-boule (10).

17. Dispositif d'attelage selon l'une quelconque des revendications précédentes, **caractérisé en ce que** le col porte-boule (10) est amovible par le moyen de fixation (30).

18. Dispositif d'attelage selon la revendication 17, **caractérisé en ce que** le moyen de fixation (30) comprend une tige (32) disposée à la seconde extrémité (14) du col porte-boule (10) et qui peut être insérée dans une douille de logement (34) solidaire du véhicule.

19. Dispositif d'attelage selon la revendication 18, **caractérisée en ce que** la tige (32) est réalisée en un métal léger.

20. Dispositif d'attelage selon la revendication 18 ou 19, **caractérisé en ce que** la tige (32) est formée d'un seul tenant sur le col porte-boule (10).

21. Dispositif d'attelage selon l'une quelconque des revendications 18 à 20, **caractérisé en ce que** la tige est pourvue d'une couche superficielle (32s) qui est formée d'un matériau plus dur que le métal léger d'un corps (44) de la tige (32).

22. Dispositif d'attelage selon l'une quelconque des revendications 18 à 21, **caractérisé en ce que** des surfaces d'application prévues dans la tige (32) pour des éléments de verrouillage (38) possèdent une couche superficielle (32s) qui est réalisée en un matériau plus dur que le métal léger du corps (44) de la tige (32).

23. Dispositif d'attelage selon l'une quelconque des revendications 18 à 21, **caractérisé en ce que** les surfaces d'application prévues pour des éléments de verrouillage (38) sont formées par
des inserts (42) insérés dans la tige (32) et réalisés en un matériau présentant une résistance superficielle supérieure à celle du métal léger.

24. Dispositif d'attelage selon l'une quelconque des revendication 18 à 23, **caractérisé en ce que** la douille de logement (34) est en métal léger.

25. Dispositif d'attelage selon la revendication 24, **caractérisé en ce que** la douille de logement (34) possède une couche superficielle qui est réalisée en un matériau plus dur que le métal léger du corps (48) de la douille de logement.

26. Dispositif d'attelage selon la revendication 24 ou 25, **caractérisé en ce que** la douille de logement (34) présente des surfaces d'application pour des éléments de verrouillage (38) qui sont réalisées en un matériau plus dur que le métal léger du corps (48) de la douille de logement (34).

27. Dispositif d'attelage selon l'une quelconque des revendications 1 à 16, **caractérisé en ce que** le col porte-boule peut pivoter par rapport au véhicule autour d'un axe (60).

28. Dispositif d'attelage selon la revendication 27, **caractérisé en ce que** le moyen de fixation (30) comprend un palier pivotant (64, 66) dont le corps de palier (64) est retenu sur le col porte-boule (10).

29. Dispositif d'attelage selon la revendication 28, **caractérisé en ce que** le corps de palier (64) du moyen de fixation, retenu sur le col porte-boule (10), est réalisé en métal léger.

30. Dispositif d'attelage selon la revendication 29, **caractérisé en ce que** le corps de palier (64) est formé d'un seul tenant sur le col porte-boule (10).

31. Dispositif d'attelage selon l'une quelconque des revendications précédentes, **caractérisé en ce que** le col porte-boule (10) est réalisé sous la forme d'une pièce matricée.

32. Dispositif d'attelage selon la revendication 31, **caractérisé en ce que** des éléments (20, 15, 32, 64) formés sur le col porte-boule (10) sont réalisés en métal léger sous la forme de pièces matricées fabriquées conjointement avec le col porte-boule (10).

33. Dispositif d'attelage selon l'une quelconque des revendications 1 à 30, **caractérisé en ce que** le col porte-boule (10) est fabriqué à l'aide d'un procédé de coulée sous pression.

34. Dispositif d'attelage selon la revendication 33, **caractérisé en ce que** les éléments 20, 15, 32, 64) formés sur le col porte-boule (10) sont fabriqués en métal léger conjointement avec le col porte-boule (10) au moyen d'un procédé de coulée sous pression.

35. Dispositif d'attelage selon l'une quelconque des revendications 1 à 30, **caractérisé en ce que** le col porte-boule (10) est fabriqué au moyen d'une sorte de matriçage hydraulique.

36. Dispositif d'attelage selon la revendication 35, **caractérisé en ce que** les éléments (20, 15, 32, 64) formés sur le col porte-boule (10) sont fabriqués en métal léger conjointement avec le col porte-boule (10) au moyen d'une sorte de matriçage hydraulique.

37. Dispositif d'attelage selon l'une quelconque des revendications précédentes, **caractérisé en ce que** la couche superficielle (20s, 10s, 32s) formée d'un matériau consolidé par diffusion de substances et plus dur que le métal léger est une couche de métal léger ennobli du corps respectif (21, 11, 44).

38. Dispositif d'attelage selon la revendication 37, **caractérisé en ce que** la couche superficielle (20s, 10s, 32s) renforcée est fabriquée par nitruration.

39. Dispositif d'attelage selon l'une quelconque des revendications 1 à 36, **caractérisé en ce que** la couche superficielle (20s, 10s, 32s) constituée d'un matériau plus dur que le métal léger est formée par une couche céramique.

40. Dispositif d'attelage selon la revendication 39, **caractérisé en ce que** la couche céramique est une couche de matière plastique-céramique.

41. Dispositif d'attelage selon la revendication 39, **caractérisé en ce que** la couche céramique est une couche de céramique oxydée.

42. Dispositif d'attelage selon l'une quelconque des revendications 1 à 16, **caractérisé en ce que** la couche superficielle (20s, 10s, 32s) est obtenue par nickelage.

43. Dispositif d'attelage selon la revendication 42, **caractérisé en ce que** le nickelage est réalisé sous la forme d'un nickelage chimique.

44. Dispositif d'attelage selon l'une quelconque des revendications précédentes, **caractérisé en ce que** la boule d'attelage (20) est pourvue d'une couche superficielle (20s) qui est réalisée en un matériau plus dur que la boule d'attelage (20).
